# EUROPEAN PATENT APPLICATION

(11) **EP 4 782 366 A1**
(43) Date of publication of application: **29.07.2026**
(21) Application number: 26153391.3
(22) Date of filing: 22.01.2026
(51) Int. Cl.: B65G 1/02, B65G 1/04, B65G 1/127, B65G 47/51, B65G 57/30, B65G 59/06

(54) **STATION FOR TEMPORARY STORAGE OF PRODUCTS FOR PACKAGING SYSTEMS AND PACKAGING SYSTEM**

(30) Priority: 28.01.2025 IT 202500001410
(71) Applicant: SACMI PACKAGING & CHOCOLATE S.P.A., 40026 Imola (BO) (IT)
(72) Inventor: COLOMBO, Matteo, 40054 BUDRIO BO (IT)
(74) Representative: Modiano, Micaela Nadia

(57) **Abstract**

A station (1) for temporary storage of products (P) for packaging systems (2) that comprise a supply line (3) of products (P) that are arranged and staggered according to a predefined logic, and a conveyor (4) for transferring the products (P) from the outlet of the supply line (3) to the inlet of a packaging apparatus (5); the station (1) comprises: at least one main frame (6) arranged proximate to the conveyor (4); at least one member (7) for insertion/extraction of products (P), which is interposed between the conveyor (4) and the main frame (6); at least one vertically-extended magazine (8), accommodated and supported by the at least one frame (6), provided with at least two posts (9), each provided with shelves (10); the shelves (10) of a pair of mutually facing posts (9) are able to slide synchronously, so maintaining a mutual height alignment; each pair of shelves (10) defines a receptacle for at least one product (P).

## Description

The present invention relates to a station for temporary storage of products for packaging systems and a packaging system that comprises such a station. It should be noted that the station for temporary storage of products is, effectively, a buffer intended to be integrated in a packaging system.

The station according to the invention is particularly indicated for packaging systems of food products such as chocolate bars, snacks and the like.

Packaging systems of the products of interest have a supply line of the products (for example placed downstream of the machines for making the products themselves), which can be distributed on the line individually and equidistant or in groups (rows), each group formed by a predefined number of products.

This line is normally intercepted by a conveyor which transfers the products (and optionally reorders or redistributes them according to criteria dictated by their packaging) to the packaging apparatus proper.

It often happens that the amount of products made available per time unit by the supply line does not coincide with the amount of products that can be processed (per time unit) by the packaging apparatus.

In particular the supply line can be provided with a section in which it is divided into several separate paths (generally superimposed) so that each path can temporarily receive a predefined number of products, accumulating them temporarily.

This implementation architecture requires the use of switches for sending the products to the various paths which, in the case of superimposed paths, also need to be able to modify the height of delivery (upstream of the paths) and of pickup (downstream of the paths). Switches of this type, which offer the necessary precision of positioning and which ensure suitable dynamics to enable the best transfer of the products, are extremely expensive and this cost is a major influencing factor on the cost of the entire system.

Furthermore, in order to ensure the temporary storage of a sufficient number of products, it is necessary to subdivide the supply line into separate paths of sufficient length to receive numerous products: this results in a considerable increase in the space occupation of the system, taking into account also an increase in length of the supply line owing to the presence of two switches (one upstream and one downstream of the paths). The increase in space occupation is a very pressing problem in that the system thus implemented can be housed only in industrial buildings of great size.

The movement of the various components necessary for the temporary storage of products on separate paths implies a considerable consumption of energy (for supplying power to all the necessary motors) and the need for complex control and management systems for coordinating all the rules of motion.

It is therefore evident that conventional plants that comprise units for the temporary storage of products arranged along the supply line are very expensive, both at the moment of purchase and in terms of operating and maintenance costs, and impose strict dimensional constraints on the industrial buildings in which they will need to be housed.

The aim of the present invention is to solve the above mentioned drawbacks, by providing a station for temporary storage of products for packaging systems that makes it possible to adopt a simple supply line, provided with a single path for the products.

Within this aim, an object of the invention is to provide a station for temporary storage of products for packaging systems that makes it possible to adopt a supply line of contained length, in particular much shorter than the length of supply lines that comprise separate paths for the temporary storage of products.

Another object of the invention is to provide a station for temporary storage of products for packaging systems that has a simple structure and contained space occupation.

Another object of the invention is to provide a station for temporary storage of products for packaging systems that is low cost, both in terms of purchase and in terms of operational management.

Another object of the invention is to provide a packaging system that offers reduced space occupation, comparable to that of systems that are not adapted for the temporary storage of products, and therefore suitable to be installed in industrial buildings of size suitable for the space occupation of fixed systems, in which no allowance is provided for the temporary storage of products.

Another object of the invention is to provide a packaging system of which the cost, both the purchase cost and the operational management cost, is lower than that of known systems that are adapted for the temporary storage of products.

Another object of the present invention is to provide a station for temporary storage of products for packaging systems and a packaging system that comprises such a station that are low cost, easily and practically implemented, and safe in use.

This aim and these objects are achieved by a station for temporary storage of products for packaging systems of the type comprising a supply line of products that are arranged and staggered according to a predefined logic, and a conveyor for transferring the products from the outlet of the supply line to the inlet of a packaging apparatus, characterized in that it comprises:
- at least one main frame arranged proximate to said conveyor;
- at least one member for insertion/extraction of products, which is interposed between said conveyor and said main frame;
- at least one vertically-extended magazine, accommodated and supported by said at least one frame, provided with at least two posts, each provided with shelves, said shelves of a pair of mutually facing posts being able to slide synchronously, so maintaining a mutual height alignment, each pair of shelves defining a receptacle for at least one product.

Such aim and such objects are also achieved by means of a packaging system of the type comprising a supply line of products which are arranged and staggered according to a predefined logic, and a conveyor, arranged transversely downstream of said supply line, for transferring the products from the outlet of the supply line to the inlet of a packaging apparatus, characterized in that it comprises a station according to at least one of the preceding claims having at least one member for insertion/extraction of products which faces and is proximate to the initial front of said conveyor, which is opposite the terminal front proximate to the inlet of said packaging apparatus.

Further characteristics and advantages of the invention will become better apparent from the detailed description that follows of a preferred, but not exclusive, embodiment of the station for temporary storage of products for packaging systems and of the packaging system that comprises such a station, which is illustrated by way of non-limiting example in the accompanying drawings wherein:
Figure 1 is a schematic front elevation view of a possible embodiment of a station for temporary storage of products according to the invention, in a first operating arrangement;
Figure 2 is a view from behind of the station of Figure 1;
Figure 3 is a side view of the station of Figure 1;
Figure 4 is a view from above of the station of Figure 1;
Figure 5 is a schematic front elevation view of the station of Figure 1 in a second operating arrangement;
Figure 6 is a view from above of the station of Figure 1 in the second operating arrangement of Figure 5;

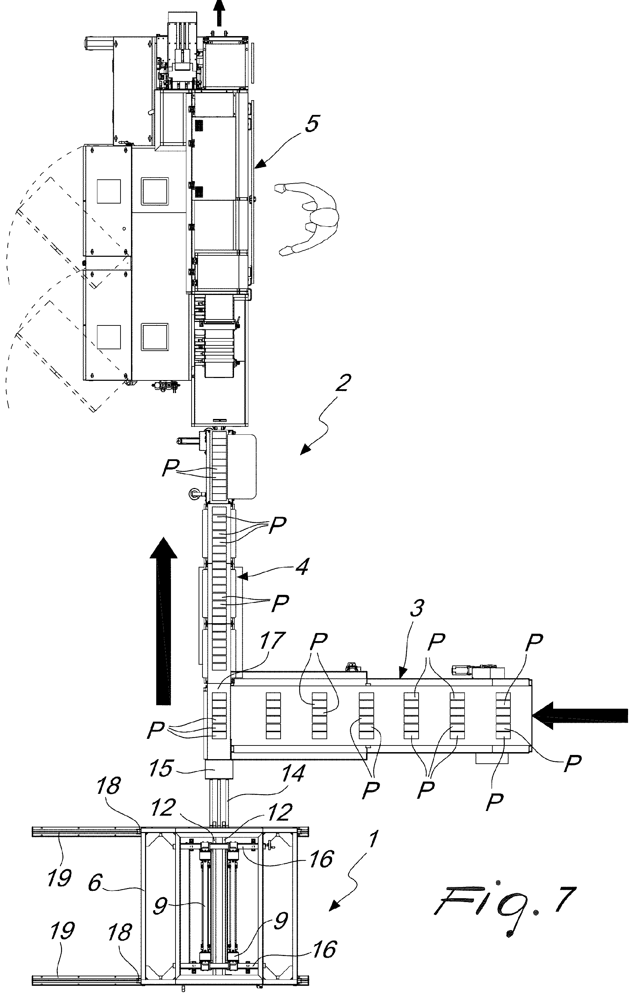

Figure 7 is a view from above of a possible embodiment of the packaging system according to the invention, in a step of operation in which the station for temporary storage is excluded;

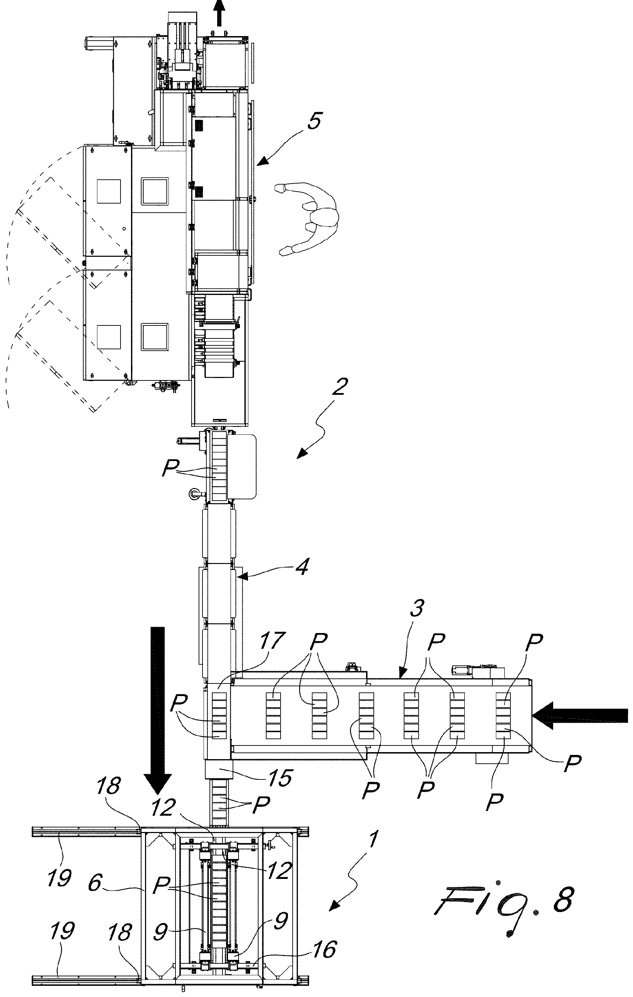

Figure 8 is a view from above of a possible embodiment of the packaging system according to the invention, in a step of operation in which the station for temporary storage is filled;

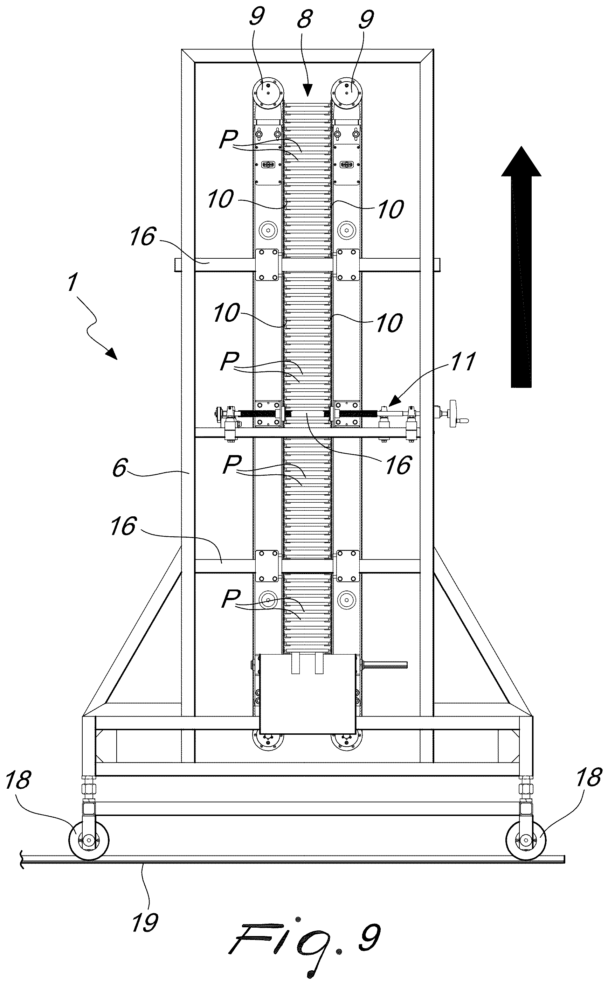

Figure 9 is a front elevation view of the station for temporary storage during the step of operation of Figure 8;

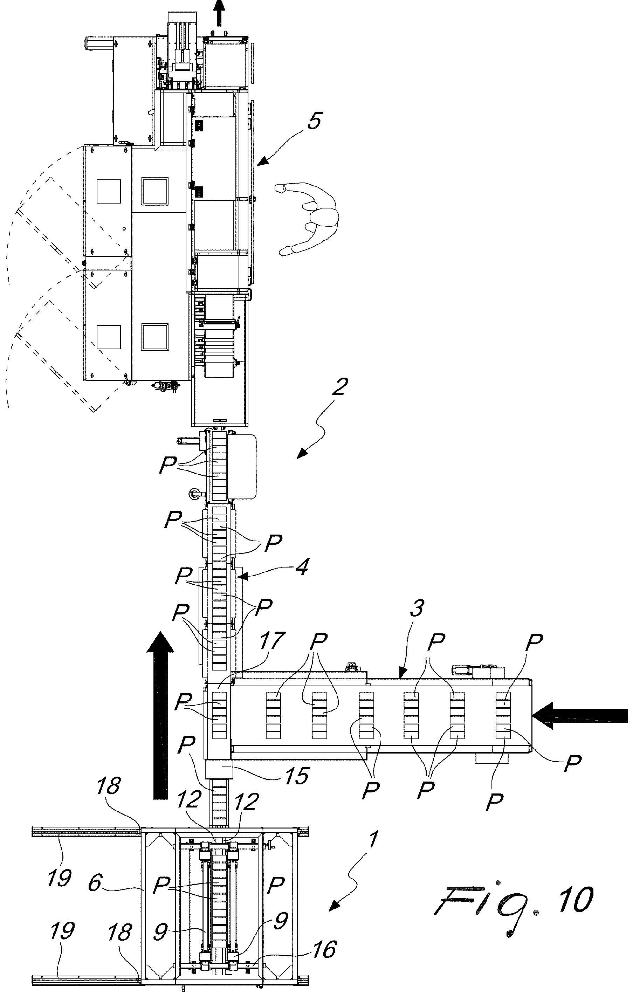

Figure 10 is a view from above of a possible embodiment of the packaging system according to the invention, in a step of operation in which the station for temporary storage is emptied;

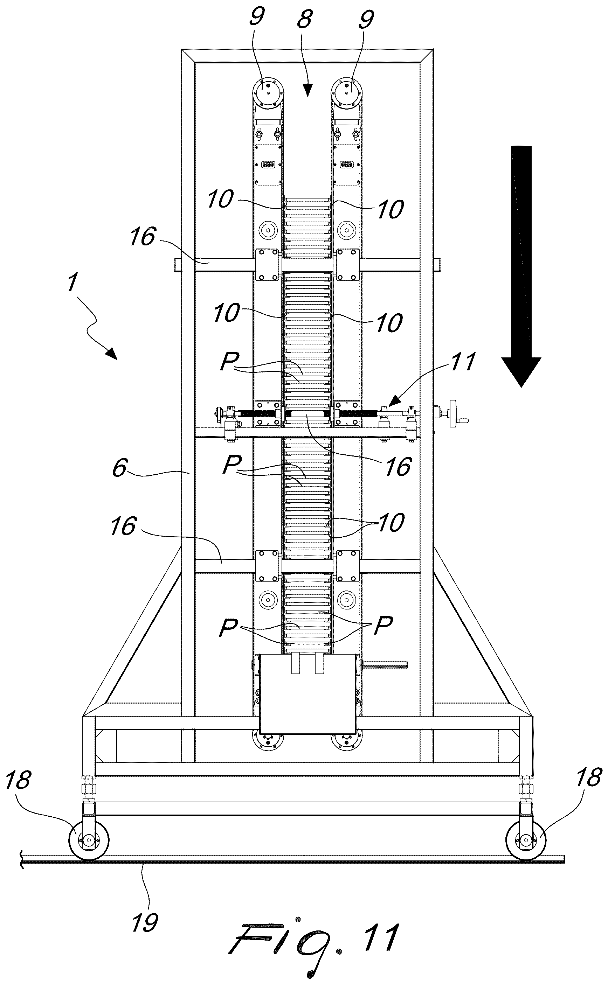

Figure 11 is a front elevation view of the station for temporary storage during the step of operation of Figure 10.

With reference to the figures, a station for temporary storage of products P for packaging systems 2 is generally designated by the reference numeral 1.

The present invention relates to the processing of products P of any kind, although the invention is particularly advantageous and innovative in relation to the processing of chocolate bars, snacks, nutrition bars and food products with similar characteristics.

The packaging systems 2 of interest comprise a supply line 3 of products P which are arranged and staggered according to a predefined logic.

Downstream of the supply line 3 is a conveyor 4 for transferring the products P from the outlet of the supply line 3 to the inlet of a packaging apparatus 5.

The station 1 according to the invention comprises at least one main frame 6 arranged proximate to the conveyor 4.

The station 1 further comprises at least one member 7 configured for the insertion/extraction of products P, which is interposed between the conveyor 4 and the main frame 6.

Inside the main frame 6 (supported and sustained by the frame 6 itself) is at least one vertically-extended magazine 8 which is provided with at least two posts 9, each one provided with shelves 10. The shelves 10 of a pair of mutually facing posts 9 are able to slide synchronously, so maintaining a mutual height alignment.

By virtue of this arrangement and the synchrony of the movements, each pair of shelves 10 defines a receptacle for at least one product P.

Basically, in the step of filling the magazine 8, the at least one member 7 translates at least one product P at a time inside a respective receptacle (defined between two facing and mutually opposite shelves 10); once a receptacle is filled, the shelves (all those present) slide so as to lift the product P that was just loaded with respect to the surface of the member 7: the lifting of the product corresponds to a height equal to the distance between contiguous shelves 10, so bringing a new pair of shelves 10 (which define an empty receptacle) into alignment with the surface of the member 7 which can then deliver at least one further product into this new receptacle. This operating sequence can be repeated until all the receptacles, defined by mutually facing shelves 10, in the magazine 8 are filled, each one containing at least one product P.

Conversely, in the step of emptying the magazine 8, the at least one member 7 of which a surface facing a receptacle inside which at least one product P is present performs a translational motion, in so doing extracting such at least one product P; once the at least one product is extracted from a first receptacle, the shelves (all those present) slide so as to lower the product P, present in the receptacle immediately above it, down to the height of the surface of the member 7, so bringing a new pair of shelves 10 (which accommodate the at least one additional product) into alignment with the surface of the member 7 which can then pick up the at least one additional product from this new receptacle. This operating sequence can be repeated until the magazine 8 has been completely emptied of the product P (i.e. no product P remains in the receptacles defined between pairs of shelves 10 of the magazine 8).

It should be noted that, interposed between the at least two posts 9 and the frame 6, there can advantageously be movement means 11 of the posts 9 along the frame 6 in order to adjust the mutual distance between them.

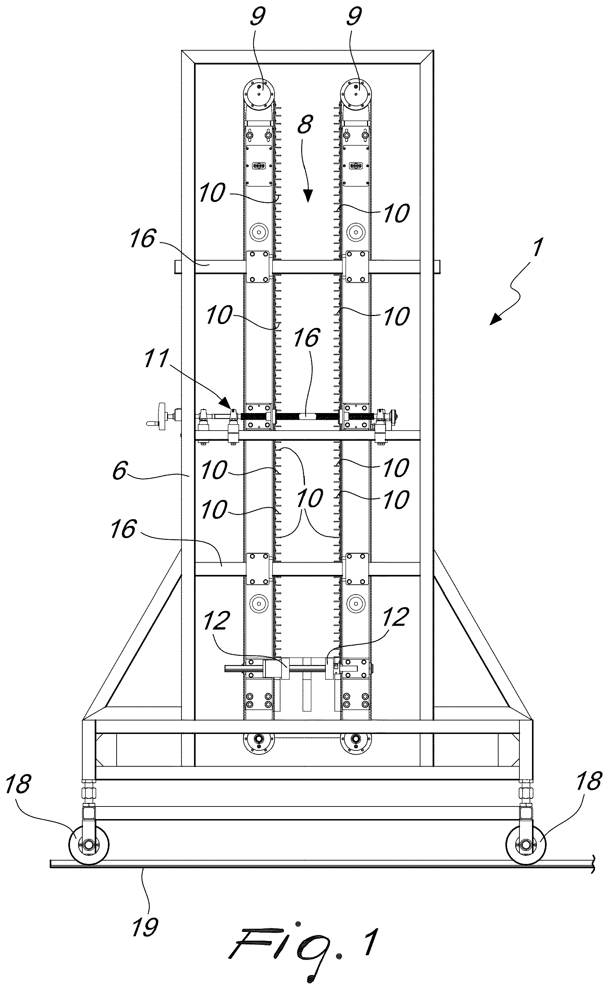

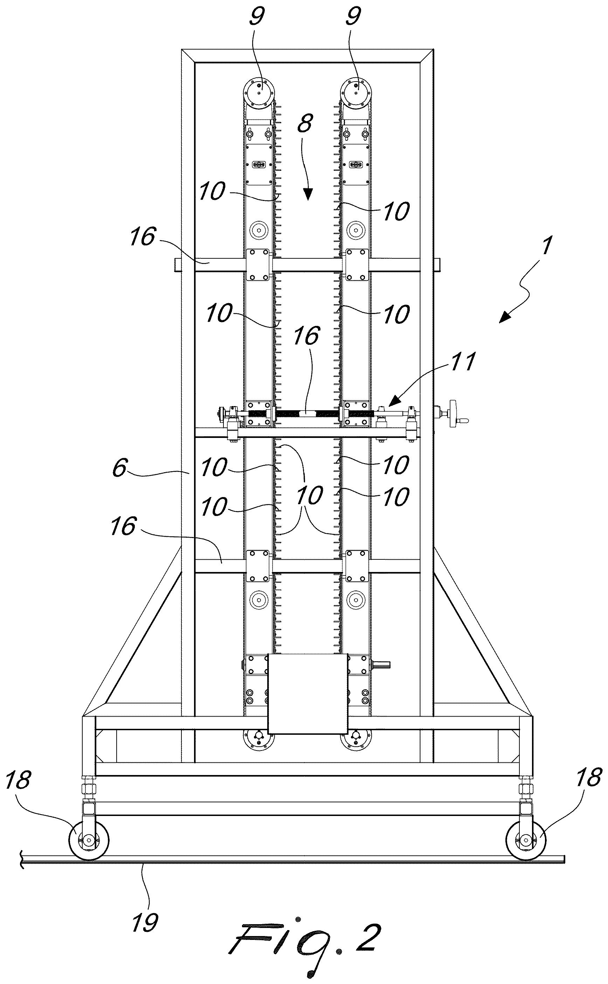

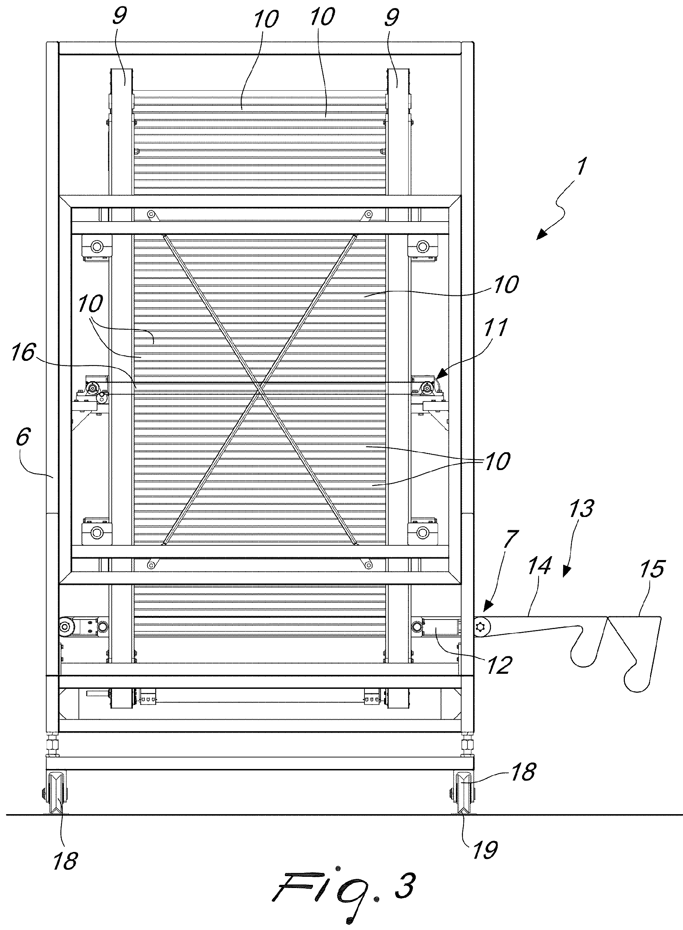

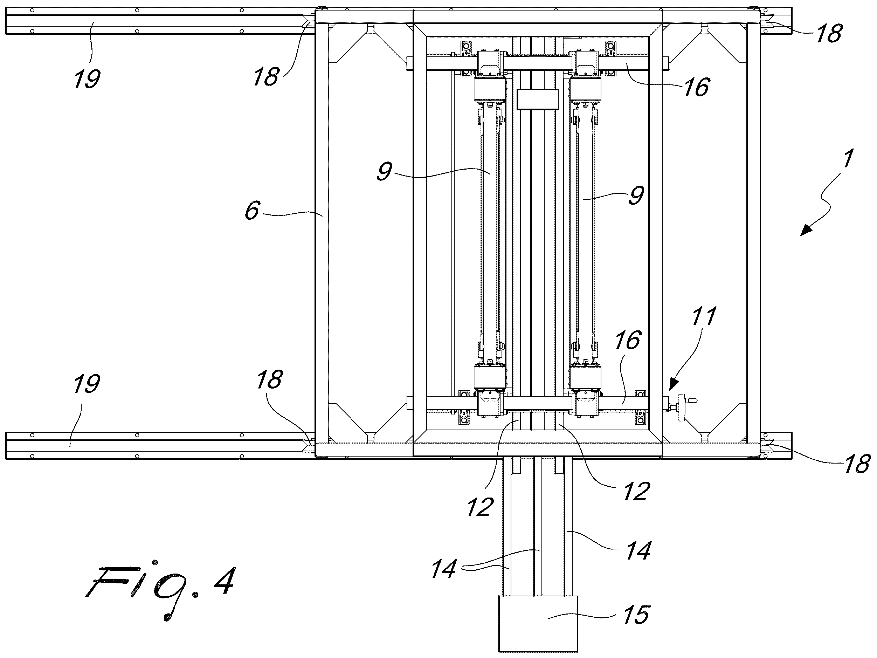

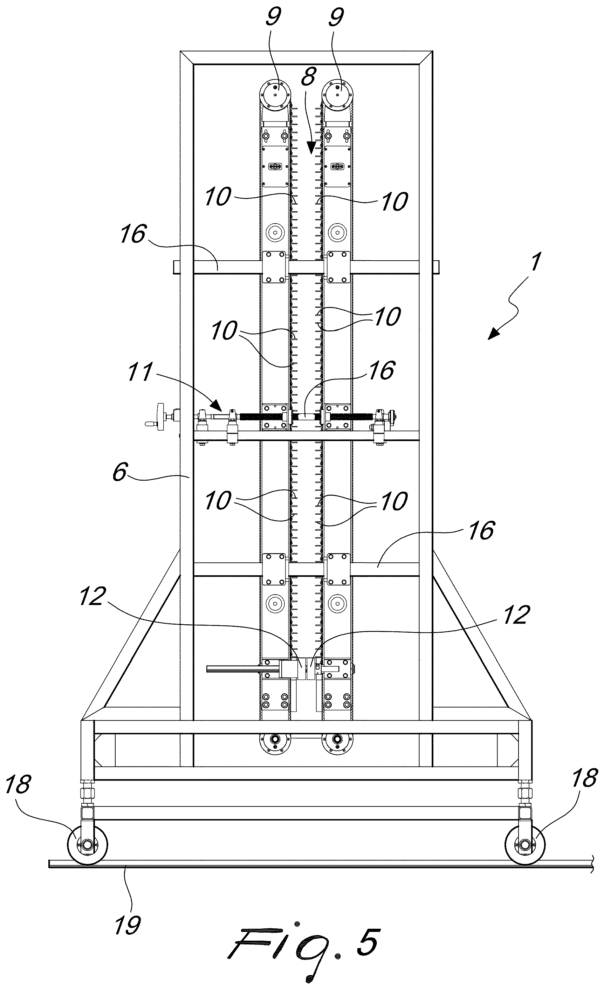

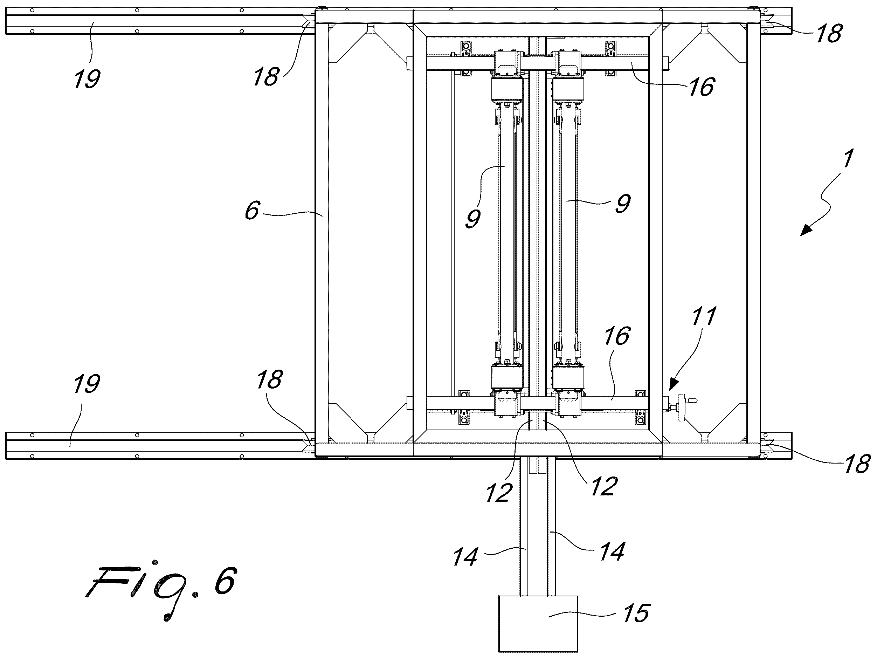

The mutual displacement (spacing apart/approach) of the posts 9 determines a corresponding movement of the mutually facing shelves 10: by virtue of the movement means, therefore, receptacles can be defined (delimited by pairs of mutually opposite and aligned shelves 10) of variable size which is adaptable to the format of the product P to be received. By way of non-limiting example, see the accompanying Figures 1 to 4 which show a station 1 in which the magazine 8 has the posts 9 at a maximum distance, defining receptacles between the shelves 10 of considerable length (so as to be able to accommodate products P of large dimensions); the accompanying Figures 5 and 6 (also provided for the purposes of non-limiting example) show a station 1 in which the magazine 8 has the posts 9 at a minimum distance, defining receptacles between the shelves 10 of minimum length (so as to be able to accommodate products P of small dimensions).

Obviously the various distances at which it is possible to arrange the posts 9 can also be very different from those shown in Figures 1 to 6.

It should be noted that the at least one member 7 for insertion/extraction of products P interposed between the conveyor 4 and the main frame 6 comprises at least two conveyor belts 12, at least two of which are integral with respective posts 9 (one belt 12 is integral with one post 9 and another belt is integral with another post 9) and are arranged at a fixed distance from them.

Preferably there are three conveyor belts 12: two outer belts 12 can conveniently be integral with the posts 9 so that, upon an adjustment of format (corresponding to a spacing apart/approach of the posts 9), these belts 12 maintain a fixed position with respect to the posts 9; a third belt 12 can be positively arranged at the centerline axis of the lane for insertion/extraction of the products P into the receptacles defined between pairs of mutually facing shelves 10.

In this manner each product P will be supported by three separate belts 12, two of which are located proximate to the ends of the product P, while a third belt 12 is arranged at its central portion.

In a format change operation that would result in an approach of the posts that would surpass a threshold limit, at which the two outer belts 12 would be arranged with their respective edges facing and proximate, it is possible to remove the third belt or to move it to a configuration out of the way.

In addition, the at least one member 7 for insertion/extraction of products P comprises at least one connecting conveyor 13 provided with two translating belts 14, 15 in sequence, each of which is of the bidirectional type.

The first translating belt 14 is closer to the main frame 6, while the second belt 15 is closer to the conveyor 4: the products P can be moved along them continuously.

In more detail, the first translating belt 14 has a front facing and proximate to the at least two conveyor belts 12, and a second translating belt 15 has an end facing and proximate to the conveyor 4.

The second translating belt 15 can profitably be constituted by a sliding mat leading to the conveyor 4 and controlled by its rule of motion: in this manner, the second translating belt 15 can apply accelerations on the products P that are such as to synchronize their advancement with the rule of motion of the products P present on the conveyor 4, so optimizing their delivery to the conveyor 4.

In order to ensure that the second translating belt 15 can translate the products P by applying the necessary accelerations on them, without making them slide over its surface (as a result of inertia-related phenomena), the second translating belt 15 can preferably comprise a suction-operated sliding mat for the temporary locking of the products P: the suction, in fact, ensures a greater stability of the products P on the surface of the sliding mat.

Each post 9 is constituted by a pair of uprights which is provided with means for driving a chain constituted by a plurality of mutually articulated links, each link comprising a respective shelf 10.

The synchronous movement of the two chains (to ensure maintenance of the correct alignment of the pairs of mutually facing shelves 10) by means of the traction means is preferably obtained using a single motor which transfers the motion to the chains through respective gear sets or elements for transmitting motion.

As previously mentioned, the posts 9 are parallel, mutually opposite and face each other, and comprise the shelves 10, in mutually aligned pairs, for the purpose of defining the respective receptacles for products P.

The movement means of the posts 9 along the frame 6 comprise transverse guides 16 for the guided sliding of these posts 9 in a configuration of constant mutual parallel arrangement.

The translation of the posts 9 occurs between a first arrangement of their maximum distance, configured for accommodating in each respective receptacle, constituted by a pair of mutually facing shelves 10, a product P having the maximum dimensions envisaged, and a second arrangement of their minimum distance, configured for accommodating in each receptacle, constituted by a pair of mutually facing shelves 10, a product P having the minimum dimensions envisaged.

The protection offered by the present invention also extends to any packaging system 2 that comprises a supply line 2 of products P that are arranged and staggered according to a predefined logic, and a conveyor 4, arranged transversely downstream of the supply line 3, for transferring the products P from the outlet of the supply line 3 to the inlet of a packaging apparatus 5.

In particular the system 2 according to the invention advantageously comprises a station 1 of the type described above, having at least one member 7 for insertion/extraction of products P which faces and is proximate to the initial front of the conveyor 4, which is opposite the terminal front that is proximate to the inlet of the packaging apparatus 5.

It is convenient to note that a delivery module 17 can conveniently be interposed between the supply line 3 and the conveyor 4, and is configured to pick up at least one product P (more probably a group, or row, of products P arranged side-by-side) from the supply line 3 and deposit it on a surface of the conveyor 4.

Since it frequently happens that the supply line 3 and the conveyor 4 have levels for conveying the products P which are arranged at different heights with respect to the walking surface, the delivery module 17 can be of the tilting type (although it is also possible for it to simply be arranged with a suitable inclination to ensure the connection between the two different heights).

The present invention also extends its protection to a method for packaging products P in a system 2, which comprises a series of consecutive steps.

Firstly it is necessary to deposit products P, according to a layout chosen from successive groups of laterally-adjacent products P (also referred to as rows of products P) and individual products P in sequence, on the supply line 3.

Subsequently it is necessary to deliver the products P, in conformance with the layout, to the conveyor 4 placed downstream of the supply line 3 (optionally adapting the pickup height to the delivery height by means of the delivery module 17).

Then the method proceeds to selecting the translation direction of the products P on the conveyor 4 between a first direction for transfer of the products P to the packaging apparatus 5 (when the intention is to proceed directly to the packaging of the products P) and a second direction, opposite to the first, for transfer of the products P to the at least one member 7 for insertion/extraction of products P of the station 1 for temporary storage, for the insertion of at least one of such products P at a time into a respective receptacle defined between two facing and mutually opposite shelves 10.

Upon the insertion of products P into respective receptacles defined between corresponding mutually opposite shelves 10, it is necessary to perform an upward translation of the shelves (using means for driving a chain constituted by a plurality of mutually articulated links, each link comprising a respective shelf 10) equal to the distance between two contiguous shelves 10 (approximately corresponding to the dimensions of a link in the chain driven by the means for driving), before the insertion of a new product P, until all available receptacles are completely filled.

Then, upon the extraction of products P from respective receptacles defined between corresponding mutually opposite shelves 10, it is positively necessary to perform a downward translation of the shelves 10 equal to the distance between two contiguous shelves 10 before the extraction of a new product P and its delivery to the member 7 for insertion/extraction of products P, which in turn is adapted to transfer a single product P at a time onto the conveyor 4, juxtaposed against the edge of a product P present thereon which arrives from the supply line 3.

The entire frame 6 can be mounted on wheels 18 (which can be moved along rails 19 or equivalent predefined paths) so as to be able to move it easily if it is necessary to perform maintenance operations on the station 1 and/or on other components of the system 2.

The station 1 according to the invention also makes it possible to provide the system 2 with a single product P at a time (therefore it makes it possible to separate out the supply) although the supply of the station has been tested using groups (rows) of products P. This option is particularly advantageous because makes it possible to vary the number of products P in each group which will subsequently be sent for packaging or, optionally, also to provide a single product at a time for subsequent packaging.

The subsequent packaging can then be performed on the basis of a supply of products P from the station 1 that is particularly homogeneous, without instantaneous increases in products P being supplied and without needing to create a specific spacing between the groups (rows) coming from upstream. The greater versatility ensured by this option of operation has never been available in conventional machinery/systems and could constitute an innovation of undoubted practical interest which would constitute a greater versatility and use differentiation.

Advantageously the present invention solves the above mentioned problems, by providing a station 1 for temporary storage of products P for packaging systems 2 that makes it possible to adopt a simple supply line 3, provided with a single path for the products P.

Conveniently the station 1 for temporary storage of products P according to the invention makes it possible to adopt a supply line 3 of contained length, in particular much shorter than the length of supply lines that comprise separate paths for the temporary storage of products P.

Advantageously the station 1 for temporary storage of products P according to the invention has a simple structure and contained space occupation.

Profitably the station 1 for temporary storage of products P according to the invention is low cost, both in terms of purchase and in terms of operational management.

Positively the packaging system 2 according to the invention offers reduced space occupation, comparable to that of systems that are not adapted for the temporary storage of products P, and therefore suitable to be installed in industrial buildings of size suitable for the space occupation of fixed systems, in which no allowance is provided for the temporary storage of products P.

Usefully, in the packaging system 2 according to the invention the cost, both the purchase cost and the operational management cost, is lower than that of known systems that are adapted for the temporary storage of products.

Positively the station 1 for temporary storage of products P and the packaging system 2 according to the invention are easily and practically implemented and low cost: the station 1 and the system 2 according to the invention therefore define innovations that are certain to be safe in use.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102025000001410 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A station for temporary storage of products (P) for packaging systems (2) of the type comprising a supply line (3) of products (P) that are arranged and staggered according to a predefined logic, and a conveyor (4) for transferring the products (P) from the outlet of the supply line (3) to the inlet of a packaging apparatus (5), **characterized in that** it comprises:
- at least one main frame (6) arranged proximate to said conveyor (4);
- at least one member (7) for insertion/extraction of products (P), which is interposed between said conveyor (4) and said main frame (6);
- at least one vertically-extended magazine (8), accommodated and supported by said at least one frame (6), provided with at least two posts (9), each provided with shelves (10), said shelves (10) of a pair of mutually facing posts (9) being able to slide synchronously, so maintaining a mutual height alignment, each pair of shelves (10) defining a receptacle for at least one product (P).

2. The station according to claim 1, **characterized in that**, interposed between said at least two posts (9) and said frame (6), are movement means (11) for moving said posts (9) along said frame (6) in order to adjust the distance between them, so defining a receptacle, between the respective mutually facing shelves (10), of variable size and adaptable to the format of the product (P) to be accommodated.

3. The station according to one or more of the preceding claims, **characterized in that** said at least one member (7) for insertion/extraction of products (P), which is interposed between said conveyor (4) and said main frame (6), comprises at least two conveyor belts (12), at least two of which are integral with respective posts (9) and are arranged at a fixed distance from them.

4. The station according to one or more of the preceding claims, **characterized in that** said at least one member (7) for insertion/extraction of products (P), which is interposed between said conveyor (4) and said main frame (6), comprises at least one connecting conveyor (13) provided with two translating belts (14, 15) in sequence, each of which is of the bidirectional type.

5. The station according to one or more of the preceding claims, **characterized in that** a first translating belt (14) has a front facing and proximate to said at least two conveyor belts (12), and a second translating belt (15) has an end facing and proximate to said conveyor (4), said second translating belt (15) being constituted by a sliding mat leading to said conveyor (4) and controlled by its rule of motion, preferably comprising a suction-operated sliding mat for the temporary blocking of the products (P).

6. The station according to one or more of the preceding claims, **characterized in that** each post (9) is constituted by a pair of uprights which is provided with means for driving a chain constituted by a plurality of mutually articulated links, each link comprising a respective shelf (10).

7. The station according to one or more of the preceding claims, **characterized in that** said posts (9) are parallel, mutually opposite, and face each other, and comprise shelves (10), mutually aligned in pairs, which define respective receptacles for products (P), said movement means (11) for moving said posts (9) along said frame (6) comprising transverse guides (16) for the guided sliding of said posts (9), in a configuration of constant mutual parallel arrangement, between a first arrangement of maximum distance, configured for accommodating in each respective receptacle, constituted by a pair of mutually facing shelves (10), a product (P) having the maximum dimensions envisaged, and a second arrangement of minimum distance, configured for accommodating in each receptacle, constituted by a pair of mutually facing shelves (10), a product (P) having the minimum dimensions envisaged.

8. A packaging system of the type comprising a supply line (3) of products (P) which are arranged and staggered according to a predefined logic, and a conveyor (4), arranged transversely downstream of said supply line (3), for transferring the products (P) from the outlet of the supply line to the inlet of a packaging apparatus (5), **characterized in that** it comprises a station (1) according to at least one of the preceding claims having at least one member (7) for insertion/extraction of products (P) which faces and is proximate to the initial front of said conveyor (4), which is opposite the terminal front proximate to the inlet of said packaging apparatus (5).

9. The system according to one or more of the preceding claims, **characterized in that** a delivery module (17) is interposed between said supply line (3) and said conveyor (4) and is configured to pick up at least one product (P) from said supply line (3) and deposit it on a surface of said conveyor (4).

10. A method for packaging products in a system according to at least one of claims 8 and 9, **characterized in that** it comprises the following consecutive steps:
- depositing products (P), according to a layout chosen from successive groups of laterally-adjacent products (P) and individual products (P) in sequence, on said supply line (3);
- delivering said products (P), in accordance with said layout, to said conveyor (4) located downstream of said supply line (3);
- selecting the direction of translation of said products (P) on said conveyor (4) between a first direction for transfer of the products (P) to said packaging apparatus (5) and a second direction, opposite to the first, for transfer of said products (P) to said at least one member (7) for insertion/extraction of products (P) of said station (1) for temporary storage, for the insertion of at least one of them at a time into a respective receptacle defined between two facing and mutually opposite shelves (10),
upon the insertion of products (P) into respective receptacles defined between corresponding mutually opposite shelves (10), performing an upward translation of said shelves (10) equal to the distance between two contiguous shelves (10), before the insertion of a new product (P), until all available receptacles are completely filled,
upon the extraction of products (P) from respective receptacles defined between corresponding mutually opposite shelves (10), performing a downward translation of said shelves (10) equal to the distance between two contiguous shelves (10) before the extraction of a new product (P) and its delivery to said member (7) for insertion/extraction of products (P), which in turn is adapted to transfer a single product (P) at a time onto said conveyor (4) substantially juxtaposed against the edge of a product (P) present thereon which arrives from said supply line (3).
